# EUROPEAN PATENT APPLICATION

(11) **EP 1 855 279 A1**
(43) Date of publication of application: **14.11.2007**
(21) Application number: 06714811.4
(22) Date of filing: 28.02.2006
(51) Int. Cl.: G11B 19/28, G11B 19/00, G11B 20/10

(54) **RECORDING MEDIUM REPRODUCING DEVICE**

(30) Priority: 28.02.2005 JP 2005052807
(71) Applicant: MATSUSHITA ELECTRIC INDUSTRIAL CO., LTD., Osaka 571-8501 (JP)
(72) Inventor: YAMADA, Tetsuhiro, MATSUSHITA El. INDUSTRIAL CO., LTD., 1-chome, Chuo-ku, Osaka-shi,Osaka 540-6319 (JP); SAMURA, Masahiko, MATSUSHITA El. INDUSTRIAL CO., LTD., 1-chome, Chuo-ku, Osaka-shi,Osaka 540-6319 (JP); TOMODA, Masaaki, MATSUSHITA El. INDUSTRIAL CO., LTD., 1-chome, Chuo-ku, Osaka-shi,Osaka 540-6319 (JP)
(74) Representative: Price, Paul Anthony King
(86) International application number: PCT/JP2006/303674
(87) International publication number: WO 2006/093111

(57) **Abstract**

Provided is a recording medium playback device intended to achieve a reduction in power consumption by stopping disk rotation during a period in which no content data is being read, while improving playability and responsiveness to external key inputs or the like, A system control section 106 instructs a servo control section 105 to stop rotating a spindle motor 102 after an optical pickup 103 completely reads the content data that is being reproduced, and to forcibly rotate the spindle motor 102 in order to start reading the next content data to be reproduced when the remaining amount of data accumulated in a buffer memory 113 falls to a threshold *n* or lower, the threshold n being calculated based on (a) a stabilisation time of the spindle motor 102, (b) a moving time of the optical pickup 103, and (c) a speed at which data is read from the buffer memory 113.

## Description

### Technical Field

The present invention relates to recording medium playback devices for reading and reproducing content data such as audio signals recorded in, for example, optical disks and magneto-optical disks.

### Background Art

Playback devices for reproducing content data, such as audio signals recorded in optical disks called CDs (Compact Disks) or magneto-optical disks called MDs (Mini Disks), have come into wide use.

Such conventional recording medium playback devices are often configured, as described in Patent Document 1, such that data is read from a disk at high speed and temporarily accumulated into a buffer memory, and the accumulated data is reproduced in order not to cause audio discontinuities even when vibrations are caused during the reproduction. Furthermore, as seen in Patent Document 2, there have been methods proposed for the purpose of suppressing power consumption, in which disk rotation is stopped during a period in which no data is being read because the amount of data in the buffer memory is full.
Patent Document 1: Japanese Laid-Open Patent Publication No. 5-217292
Patent Document 2: Japanese Laid-Open Patent Publication No. 11-238314

### Disclosure of the Invention

### Problems To be Solved by the Invention

In recent years, it has become possible to readily create disks containing recorded content composed of a wide variety of sources, including compressed audio. In the case where the disk contains recorded content of compressed audio sources or the like, even if a piece of content data is completely accumulated in the buffer memory, it is better in most cases not to read the next content data to be reproduced until that piece of content data is completely reproduced. This is because the next content data to be reproduced might not be recorded in a sequential position on the disk, and if each piece of content data is assigned information such as a header and a footer, processing can be made in units of content data to facilitate control.

However, in the case where rotation of the disk is stopped in order to save power consumption after the content data that is currently being reproduced is accumulated in its entirety into the buffer memory even if the disk rotation is started in order to read the next content data to be reproduced, it takes a period of time until the rate of rotation sufficiently stabilizes to allow data reading. Therefore, there are problems where reproduction of the next content data might be delayed, or where the disk is about to be rotated, but a request is made for switching to another piece of content data by an external key input or suchlike, and switching of the state might be delayed.

In order to avoid any delay in reproduction of the next content data, it is conceivable to employ a method as described in Patent Document 2, in which the next content data to be reproduced is previously accumulated into the buffer memory, but such a method cannot fully benefit from stopping the disk rotation in order to save power consumption.

The present invention provides a recording medium playback device intended to achieve a reduction in power consumption by stopping disk rotation during a period in which no content data is being read, while improving playability and responsiveness to external key inputs or the like.

### Means for Solving the Problems

To solve the above problems, a recording medium playback device of the present invention includes:
a pickup for reading content data from a recording medium having at least a piece of content data recorded therein;
a first motor for rotating the recording medium;
a second motor for moving the pickup in a radial direction of the recording medium;
a memory control section for writing content data, which is read from the recording medium by the pickup, to a buffer memory at a speed faster than a normal reproduction speed, and reading the content data from the buffer memory at the normal reproduction speed:
a servo control section for controlling operations of the pickup, the first motor and the second motor; and
a system control section for controlling operations of the memory control section and the servo control section, and
the system control section instructs the servo control section to stop rotating the first motor after the pickup completely reads content data that is currently being reproduced, and to activate the first motor, thereby causing the pickup to start reading next content data to be reproduced from the recording medium when a remaining amount of data accumulated in the buffer memory falls to a threshold or lower, the threshold being determined by at least one of the following (a) and (b), in combination with the following (c):
   (a) a time period in which to stabilize a rate of rotation of the first motor until the pickup becomes capable of performing data reading from the recording medium;
   (b) a time period in which to move the pickup from a position on the recording medium where the content data that is currently being reproduced is recorded to a position where the next content data to be reproduced is recorded;
   (c) a speed at which the memory control section performs data reading from the buffer memory.

In the recording medium playback device of the present invention, the threshold may be calculated from the values (a), (b) and (c). In addition, the threshold may be calculated from either the value (a) or (b), in combination with the value (c).

Also, in the recording medium playback device of the present invention, when the content data is encoded at a constant bit rate, the value (c) is preferably determined based on a value of the constant bit rate. In addition, when the content data is encoded at a variable bit rate, the value (c) is preferably determined based on a maximum value of the variable bit rate or a larger value.

### Effect of the Invention

In the recording medium playback device of the present invention, when the remaining amount in the buffer memory falls to a predetermined threshold or lower, the disk is forcibly rotated at a constant rate of rotation that allows data reading, and furthermore, the pickup starts moving to a position where the next content data to be reproduced is recorded.

According to the present invention, after the content data that is being reproduced is completely reproduced, data reading can be immediately performed at the time when reproduction of the next content data is started, and therefore it is possible to achieve improvements in playability and responsiveness to external key inputs or the like.

### Brief Description of the Drawings

[FIG. 1] FIG. 1 is a block diagram of a CD playback device according to a first embodiment of the present invention.
[FIG. 2] FIG. 2 is a flowchart for explaining the operation of the CD playback device in FIG. 1.
[FIG. 3] FIG. 3 is a diagram illustrating the amount of data remaining in a buffer memory and the rate of disk rotation in terms of their fluctuations over a period of playback time of the CD playback device in FIG. 1.
[FIG. 4] FIG. 4 is a diagram illustrating the relationship between a position where the end of the content data that is currently being reproduced is recorded and a position where the beginning of the next content data to be reproduced is recorded.
[FIG. 5] FIG. 5 is a diagram illustrating a magnification of a portion of FIG. 3.
[FIG. 6] FIG. 6 is a diagram illustrating another example of FIG. 5.

### Best Modes for Carrying Out the Invention

Hereinafter, recording medium playback devices according to embodiments of the present invention will be described with reference to the drawings. Note that the following embodiments will be described with respect to the case where the present invention is applied to a CD (Compact Disk) playback device, which is a type of recording medium playback device.

### (First Embodiment)

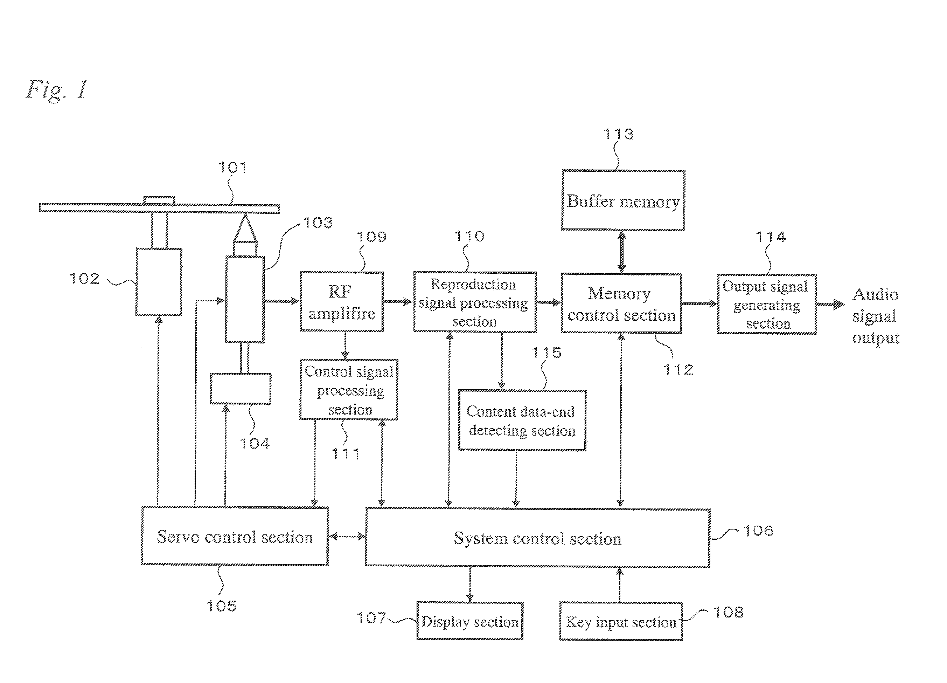

FIG. 1 is a block diagram of a CD playback device according to a first embodiment of the present invention. First, the function and operation of each component of the CD playback device will be described below.

A compact disk (hereinafter, abbreviated as the "disk") 101 is rotated by a spindle motor 102. In general, the CD playback devices employ CLV (constant Linear Velocity) because it is necessary to always read a constant amount of data. Therefore, the rotation of the spindle motor 102 is controlled by a servo control section 105, such that the disk 101 is rotated at a constant linear velocity.

An optical pickup 103 is controlled by a traverse motor 104 so as to move in the radial direction of the optical disk 101. In addition, the optical pickup 103 is controlled by the servo control section 105 in terms of focusing and tracking. The optical pickup 103 irradiates the disk 101 with a laser beam, and detects a reflected beam, thereby detecting a focus error in accordance with, for example, an astigmatism method, or a tracking error in accordance with, for example, a push-pull method, and furthermore, the optical pickup 103 outputs an RF signal based on a beam reflected from a target track.

A system control section 106 is composed of a microcomputer including a CPU, a ROM and a RAM, and manages the overall operation of the CD playback device. The system control section 106 is connected to a display section 107 and a key input section 108. The display section 107 displays, for example, a total playback time of the disk 101 loaded into the playback device and a track number of a song that is being played. The key input section 108 includes various keys, such as a power key, a playback key, a pause key, a stop key, and a song selection key, for inputting instructions to the playback device.

When instructed by the system control section 106 to start a reproduction process, the servo control section 105 outputs a control signal, so that the optical pickup 103 irradiates the disk 101 with a laser beam and the spindle motor 102 rotates disk 101. Then, a beam reflected from the disk 101 is converted into an RF signal, which is amplified by an RF amplifier 109 and thereafter inputted to a reproduction signal processing section 110 and a control signal processing section 111. The control signal processing section 111 extracts a focus error signal and a tracking error signal from the output signal of the optical pickup 103, and supplies the signals to the servo control section 105.

The servo control section 105 performs focus control on an optical system of the optical pickup 103, such that the focus error signal from the control signal processing section 111 becomes "0", and the servo control section 105 also performs tracking control on the optical system of the optical pickup 103, such that the tracking error signal becomes "0".

The reproduction signal processing section 110 extracts a digital audio signal recorded in the disk 101 from the RF signal from the optical pickup 103, and transfers the extracted signal to the memory control section 112 after performing necessary processing such as error correction. The memory control section 112 writes the digital audio signal, which has been transferred from the reproduction signal processing section 110, to a buffer memory 113 at a speed faster than a normal reproduction speed.

Then, the memory control section 112 sequentially reads digital audio signal from the buffer memory 113 at the normal reproduction speed, and supplies the digital audio signal to an output signal generating section 114. At this time, the memory control section 112 controls the writing to and reading from the buffer memory 113, such that the amount of data accumulated in the buffer memory 113 does not falls to a predetermined value or lower.

If occurrence of a track jump is detected during reproduction, the memory control section 112 stops the data writing from the reproduction signal processing section 110 to the buffer memory 113, and performs only the data transfer from the buffer memory 113 to the output signal generating section 114. The data writing from the reproduction signal processing section 110 to the buffer memory 113 is restarted when the reproduction position is corrected.

The output signal generating section 114 performs a predetermined process, such as a decompression process, on the digital audio signal read from the buffer memory 113, thereby generating an analog audio signal. The generated analog audio signal is outputted to loudspeakers or headphones.

The memory control section 112 constantly monitors the amount of data remaining in the buffer memory 113, so that the system control section 106 can obtain the amount of data remaining in the buffer memory 113 via the memory control section 112. Therefore, it is possible to detect when data is written to the buffer memory 113 up to the limit of its storage capacity or when the amount of data remaining in the buffer memory 113 tails below a predetermined value.

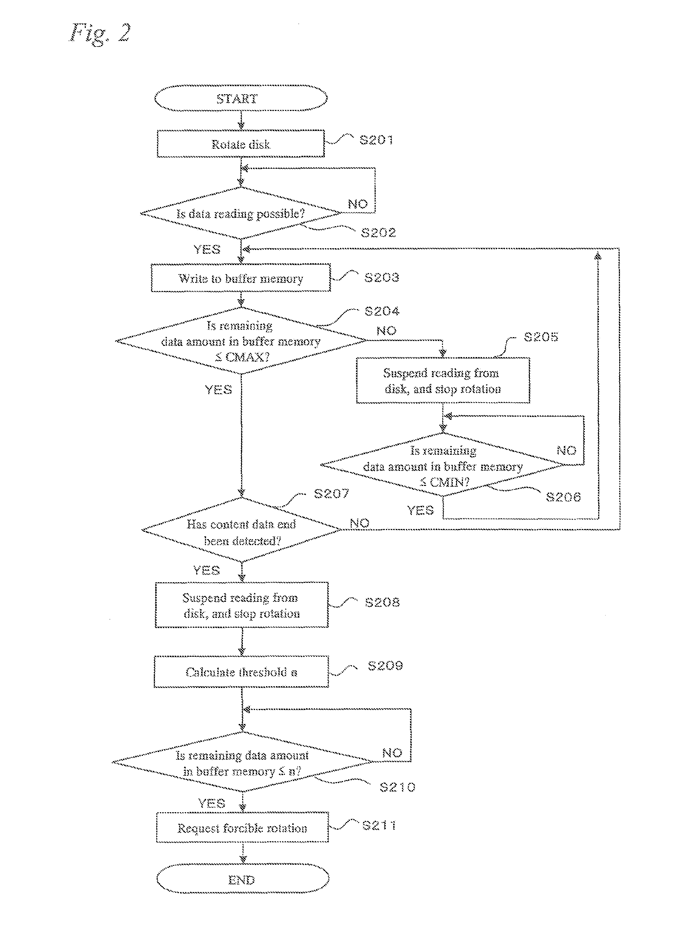

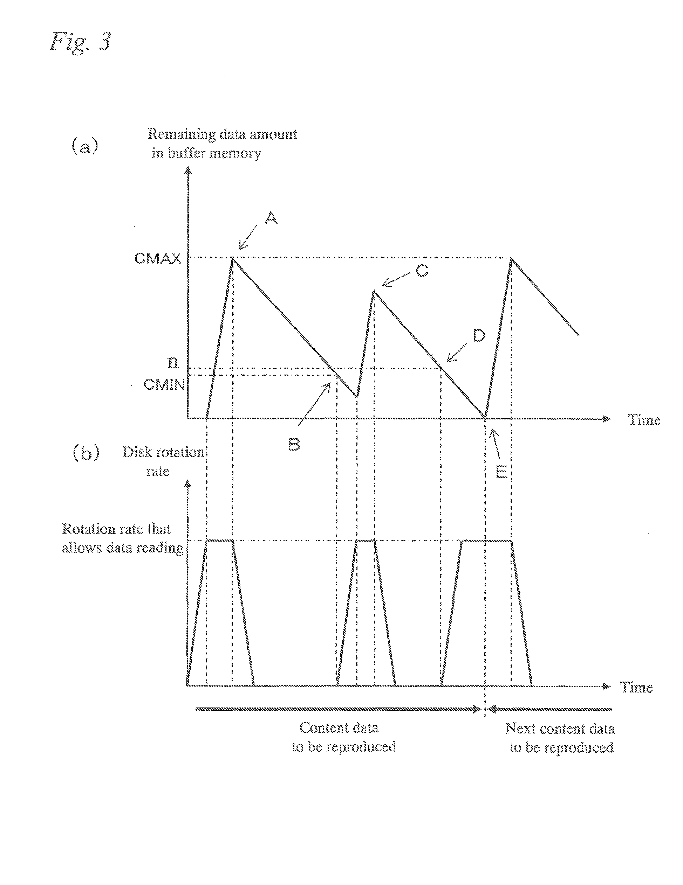

FIG. 2 is a flowchart illustrating the operation of the CD playback device according to the present embodiment, and FIG. 3 is a diagram illustrating the amount of data remaining in the buffer memory 113 and the rate of rotation of the disk 101 in terms of their fluctuations over a period of reproduction time of the playback device. In (a) of FIG. 3, the vertical axis denotes the amount of data remaining in the buffer memory 113, and the horizontal axis denotes time. In (b) of FIG. 3, the vertical axis denotes the rate of rotation of the disk 101, and the horizontal axis denotes the same time frame as in (a) of FIG. 3.

Note that the rate of disk rotation, in fact, rises or falls, tracing complicated curves, but in FIG. 3, it is represented by straight lines for ease of explanation. Also, since the playback device in FIG. 1 employs CLV, the rate of rotation that allows data reading varies between positions of the pickup 103, but in (b) of FIG. 3, it is shown as being constant for ease of explanation.

Hereinbelow, the operation of the CD playback device according to the present embodiment will be described with reference to FIGs. 1 to 3. When the disk 101 is loaded into the playback device, and the playback key of the key input section 108 is pressed to instruct execution of reproduction, the system control section 106 supplies power to each component to execute a startup operation. Specifically, the spindle motor 102 is rotated, the optical pickup 103 irradiates the disk 101 with a laser beam, and based on information obtained from the reflected laser beam, the spindle motor 102 and a focus coil and a tracking coil of the optical pickup 103 are controlled, such that data can be properly read from the disk 101 (step S201).

When data reading from the disk 101 is made possible (S202), content data read by the pickup 103 is converted into a digital audio signal by the reproduction signal processing section 110, and thereafter written to the buffer memory 113 by the memory control section 112 (S203).

When data is accumulated into the buffer memory 113 up to its maximum capacity CMAX as indicated by point A in (a) of FIG. 3 (S204), the system control section 106 suspends the data reading from the disk 101, and stops rotating the spindle motor 102 (S205).

The data accumulated in the buffer memory 113 is converted into an analog signal by the output signal generating section 114 and outputted from the CD playback device as an audio signal. The data accumulated in the buffer memory 113 is reduced over time by being read, but the remaining amount in the buffer memory 113 is constantly monitored by the memory control section 112, and if the remaining amount of data is determined to have been reduced to a predetermined amount CMIN as indicated by point B in (a) of FIG. 3 (S206), the spindle 102 is rotated again in accordance with an instruction by the system control section 106, so that the rest of the content data that is being reproduced is read by the optical pickup 103.

Note that the value of CMIN is set with a margin, so as not to cause audio discontinuities, etc., even when a track jump, i.e., jumping from the reproduction position, is caused by disturbances, such as vibration, during the data reproduction.

Next, when the end of the content data read from the disk, as indicated by point C in (a) of FIG. 3, is detected by a content data-end detecting section 115 (S207), the optical pickup 103 suspends the data reading from the disk 101, and the spindle motor 102 stops rotating (S208), but the data reading from the buffer memory 113 continues even thereafter.

During the data reproduction, if the user provides an input to the key input section 108 to play another song, the system control section calculates a threshold n for the remaining data amount based on a calculation formula to be described later (S209). When the remaining data amount falls to the threshold n or lower as indicated by point D in (a) of FIG. 3 (S210.), the system control section 106 requests the servo control section 105 to forcibly rotate the disk 101 (S211), so that the spindle motor 102 rotates the disk 101, and furthermore, the traverse motor 104 causes the optical pickup 103 to move to a position at which to read the next content data to be reproduced.

As a result, it becomes possible to immediately read the data because at point E in (a) of FIG. 3, i.e., a time point when the amount of data remaining in the buffer memory 113 is exhausted and reading of the next content data to be reproduced is started, the disk 101 is rotated at the rate of rotation that allows data reading and the optical pickup 103 has moved to the position at which the beginning of the next content data to be reproduced is recorded.

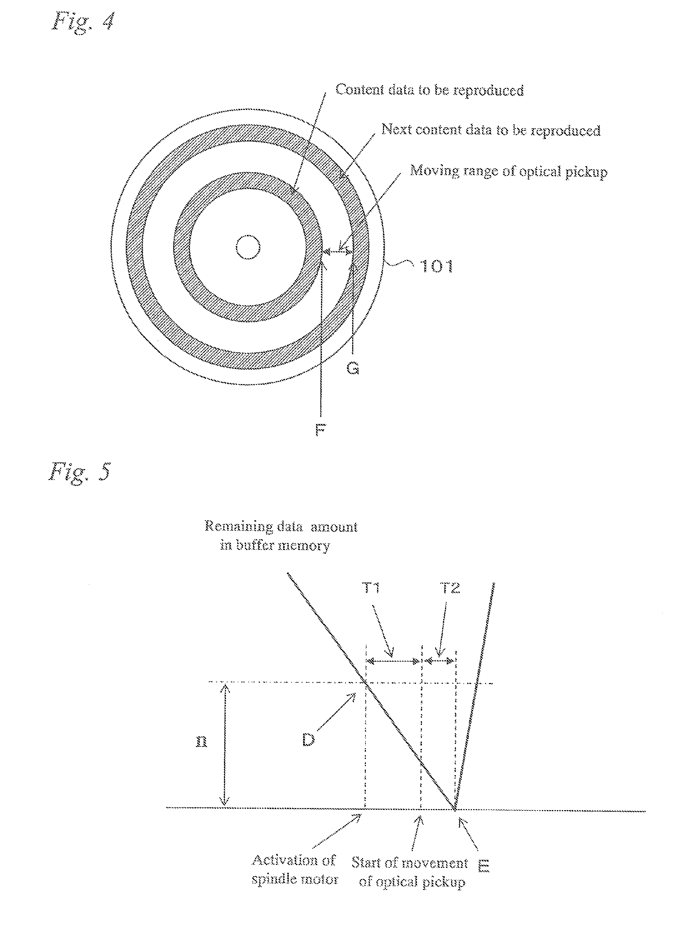

Next, how the threshold n is obtained will be described with reference to FIGs. 4 and 5. FIG. 4 is a diagram illustrating the relationship between a position F on the disk 101 where the end of the content data that is currently being reproduced is recorded and a position G where the beginning of the next content data to be reproduced is recorded, and FIG. 5 is a diagram illustrating a magnification of the vicinity of the points D and E in FIG. 3.

At a time point as shown in FIG. 3 (between the points C and D) when the optical pickup 103 reads the next content data to be reproduced from the disk 101, the spindle motor 102 is not rotating and stops at the recording position F at the end of the content data that is currently being reproduced. Therefore, in order to play a song designated by the user, it is necessary to stabilize the rotation of the spindle motor 102, and move the optical pickup 103 to the recording position G at the beginning of the next content data to be reproduced.

As is apparent from FIG. 5, data reading from the disk 101 is not possible during a time period that is a sum of a time period T1 until when the rotation of the spindle motor 102 is stabilized at the recording position F at the end of the content data that is currently being reproduced and a following time period T2 until when the optical pickup 103 is moved to the recording position G at the beginning of the next content data to be reproduced. Therefore, by stabilizing the rotation of the spindle motor 102 at a time point preceding, by a time period of (T1+T2) or a longer time period, the time point when the amount of data remaining in the buffer memory 113 is exhausted, specifically at a time point when the amount of data remaining in the buffer memory 113 falls to the threshold n, it becomes possible to immediately perform data reading at the time (point E) when the next content data to be reproduced is started to be read.

As is apparent from FIG. 5, the value of the threshold n can be calculated from the stabilization time T1 of the spindle motor 102, the moving time T2 of the optical pickup 103, and the speed at which data is read from the buffer memory 113. The system control section 106 has data for calculating the time period of (T1+T2), which is stored in an internal ROM.

In the present embodiment, as described earlier, CLV is employed, so that the rotational speed of the disk 101 becomes faster toward the inner circumference of the disk and slower toward the outer circumference, and therefore the rotational stabilization time of the spidle motor 102 varies in accordance with the position of the optical pickup 103 in the radial direction. For example, when playing a disk in which a 70-minute-long audio signal is recorded, the rate of rotation and the stabilization time of the spindle motor 102 are, respectively: 811 rpm and 8.9 seconds on the inner circumference-side of the disk 101 (five minutes after the start of playing); 571 rpm and 5.7 seconds at a mid point (30 minutes); and 417 rpm and 3.6 seconds on the outer circumference-side (70 minutes). Therefore, the system control section 106 has tabular data prestored in the ROM, regarding the positions in the radial direction and the stabilization time T1 of the spindle motor 102. Note that the positions in the radial direction are represented by the number of tracks crossed from a reference position by the optical pickup 103.

On the other hand, the moving time T2 of the optical pickup 103 varies in accordance with the moving distance of the optical pickup 103, and therefore the system control section 106 obtains it by dividing the moving distance of the optical pickup 103 by the moving speed. For reference's sake, in the CD playback device according to the present embodiment, the moving speed of the optical pickup 103 is 22 mm/sec, and the maximum moving time is 1.5 seconds.

In this manner, in the present embodiment, after the end of the content data that is being reproduced is detected, the disk 101 is controlled and forcibly rotated at the time when the amount of data remaining in the buffer memory 113 falls to the threshold n or lower, and it is possible to immediately read the data because the disk 101 is rotated at the rate of rotation that allows data reading at the time when reading of the next content data to be reproduced is started.

Note that in the present embodiment, the threshold n is obtained on the premise that an audio signal quantized at a constant bit rate is recorded in the disk 101, but if the audio signal is quantized at a variable bit rate, the threshold n is calculated based on a maximum bit rate. If the CMIN is determined by considering the bit rate of the data that is being reproduced as the maximum bit rate, and thereafter the bit rate exceeds that value, the amount of data remaining in the buffer memory 113 falls to the CMIN or lower before the time when the CMIN should be reached, so that if the amount of data remaining in the buffer memory 113 falls to "0", audio discontinuities will occur or a longer silent period will occur. Accordingly, in the case of the variable bit rate, it is necessary to calculate the threshold from the maximum bit rate or a larger value.

### (Second Embodiment)

In the first embodiment, the threshold n is obtained on the premise that the optical pickup 103 starts moving after the rotation of the spindle motor 102 is stabilized, but depending on playback devices, it is possible to stabilize the rotation of the spindle motor 102 in parallel with the movement of the optical pickup 103. The present embodiment will be described with respect to a CD playback device in which the rotation of the spindle motor 102 is stabilized in parallel with the movement of the optical pickup 103. Note that the playback device is configured in the same manner as the playback device according to the first embodiment shown in FIG. 1, except for control by the system control section 106, and therefore the description thereof will be omitted.

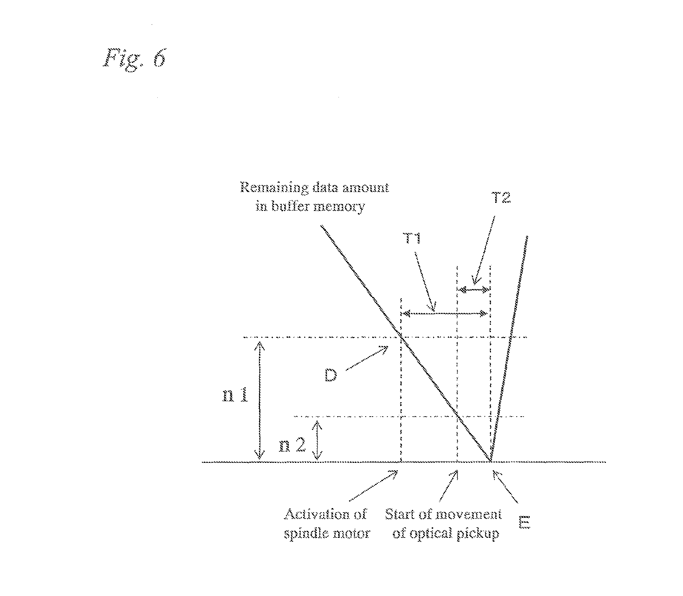

FIG. 6 is a diagram illustrating a magnification of the vicinity of the points D and E in FIG. 3 in relation to the present embodiment. As shown in FIG. 6, the threshold n is determined by the larger one of the following values: a threshold *n1,* which is calculated based only on the rotational stabilization time T1 of the spindle motor 102; and a threshold *n2,* which is calculated based only on the moving time T2 of the optical pickup 103. As described earlier, in the CD playback device according to the first embodiment, the stabilization time of the spindle motor 102 and the maximum moving time of the optical pickup 103 are respectively 3.6 to 8.9 seconds and 1.5 seconds, and therefore the threshold n is calculated based on the rotational stabilization time T1 of the spindle motor 102.

Note that the above embodiments have been described with respect to the case where the present invention is applied to the CD playback device, but the present invention is not limited to this, and any playback devices for the magneto-optical disk or the magnetic disk are not excluded because the magneto-optical disk and the magnetic disk are applicable so long as they are recording media having at least a piece of content data recorded therein. In addition, as for the rotational control of the recording medium, the present invention is applicable not only to playback devices employing the CLV as described in the above embodiments, but also to playback devices for DVD or suchlike, which employ CAV (Constant Angular Velocity).

In addition, the above embodiments have been described with respect to the case where the traverse motor is used as a means for moving the optical pickup, but any other moving means are applicable and therefore not excluded.

In addition, the above embodiments have been described with respect to the case where the audio signal is quantized at a various bit rate, and the threshold n is calculated from the maximum value of the variable bit rate, but the content data may be divided into a plurality of blocks so that the threshold n is calculated from a maximum bit rate for each block.

### Industrial Applicability

In the recording medium playback device of the present invention, when the content data that is being reproduced is completely reproduced and reproduction of the next content data to be reproduced is started, it is possible to immediately read the data because the rate of rotation of the disk has reached a certain value at which the data reading is possible, and furthermore, the movement of the pickup has been completed. Thus, it is possible to achieve improvements in playability and responsiveness to external key inputs and so on. The recording medium playback device of the present invention is preferred in particular as a mobile disk playback device for which it is important to reduce power consumption and thereby ensure prolonged battery longevity.

## Claims

1. A recording medium playback device comprising:
a pickup for reading content data from a recording medium having at least a piece of content data recorded therein;
a first motor for rotating the recording medium;
a second motor for moving the pickup in a radial direction of the recording medium;
a memory control section for writing content data, which is read from the recording medium by the pickup, to a buffer memory at a speed faster than a normal reproduction speed, and reading the content data from the buffer memory at the normal reproduction speed,
a servo control section for controlling operations of the pickup, the first motor and the second motor; and
a system control section for controlling operations of the memory control section and the servo control section,
wherein the system control section instructs the servo control section to stop rotating the first motor after the pickup completely reads content data that is currently being reproduced, and to activate the first motor, thereby causing the pickup to start reading next content data to be reproduced from the recording medium when a remaining amount of data accumulated in the buffer memory falls to a threshold or lower, the threshold being determined by at least one of the following (a) and (b), in combination with the following (c):
(a) a time period in which to stabilize a rate of rotation of the first motor until the pickup becomes capable of performing data reading from the recording medium;
(b) a time period in which to move the pickup from a position on the recording medium where the content data that is currently being reproduced is recorded to a position where the next content data to be reproduced is recorded;
(c) a speed at which the memory control section performs data reading from the buffer memory.

2. The recording medium playback device according to claim 1, wherein the threshold is calculated from the values (a), (b) and (c).

3. The recording medium playback device according to claim 1, wherein the threshold is calculated from either the value (a) or (b), in combination with the value (c).

4. The recording medium playback device according to claim 1, wherein when the content data is encoded at a constant bit rate, the value (c) is determined based on a value of the constant bit rate.

5. The recording medium playback device according to claim 1, wherein when the content data is encoded at a variable bit rate, the value (c) is determined based on a maximum value of the variable bit rate or a larger value.
